# FASCICULE DE BREVET EUROPEEN

(11) **EP 0 471 719 B1**
(45) Date de publication et mention de la délivrance du brevet: **27.12.1995**
(21) Numéro de dépôt: 90907168.0
(22) Date de dépôt: 02.05.1990
(51) Int. Cl.: A01B 15/16

(54) **DISQUE DE LABOUR DU TYPE DESTINE A ETRE MONTE LIBRE EN ROTATION SUR UN AXE SOLIDAIRE DU CHASSIS D'UNE CHARRUE**
FREI ROTIERENDE SCHEIBE FÜR SCHEIBENPFLUG
TILLING WHEEL FOR FREE ROTATABLE MOUNTING ON AN AXLE FIXED TO THE FRAME OF A PLOUGH

(30) Priorité: 02.05.1989 FR 8905815; 27.11.1989 FR 8915558
(43) Date de publication de la demande: 26.02.1992
(73) Titulaire: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel
(86) Numéro de dépôt international: FR9000313
(87) Numéro de publication internationale: WO9013217

(56) Documents cités:
- EP-A- 162 197
- DE-B- 1 051 549
- FR-A- 390 873
- FR-A- 455 691
- SU-A- 1 033 017
- US-A- 1 214 882
- US-A- 2 746 371

## Description

La présente invention concerne un disque de labour destiné à être monté avec plusieurs autres disques de même nature, libre en rotation autour d'un axe solidaire du châssis d'une charrue, ledit axe étant parallèle au sol mais incliné par rapport à la direction d'avance de la charrue de manière à imprimer un mouvement de rotation aux disques lors du déplacement de la charrue, la périphérie du disque vue parallèlement à son axes de rotation présentant la forme de pales.

Ces disques de type connu se présentent généralement sous la forme d'une calotte sphérique en acier centrée sur leur axe de rotation.Ils forment donc une cuvette au fond de laquelle se trouve leur moyeu et provoquent de ce fait un retournement partiel de la terre lors du labour.

De tels disques de labour tels que décrits dans le document US-A-2034579 comportent des encoches à leur périphérie. Ils ne donnent pas entière satisfaction du fait que d'une part ils ont tendance à recueillir et à accrocher les végétaux poussant à la surface du terrain labouré et que d'autre part, la surface du terrain labouré ne se présente pas toujours avec la structure que l'on souhaite lui conférer.

Un autre inconvénient des disques de labour connus du type précité réside dans le fait qu'ils forment dans le terrain une semelle, c'est-à-dire qu'ils créent une surface de séparation franche entre la partie du terrain qui est labourée et qui est par conséquent meuble et la partie non labourée et par conséquent dure.

On connaît d'après le document EP-A-0162197 des disques de labour comportant des secteurs contigus munis d'une arête, des échancrures à angles aigus placés entre les secteurs permettent de réaliser des lignes de coupure sur le terrain de labour.

La présente invention vise à pallier ces inconvénients.

La présente invention a pour objet un disque de labour destiné à être monté libre en rotation sur une charrue en subissant une rotation spontanée lors de l'avancement de la charrue, la périphérie du disque présentant la forme de pales, lesdites pales comprenant un premier bord d'attaque tranchant convexe dont la forme est telle que lorsque l'on se déplace sur lui en allant du centre vers la périphérie du disque, on tourne autour de l'axe de ce dernier dans la direction opposée au tranchant du premier bord d'attaque; un second bord d'attaque adjacent audit premier bord d'attaque et dont le tranchant s'étend le long de la périphérie du disque; un bord de fuite concave adjacent audit second bord d'attaque et s'étendant en direction du centre du disque; chaque pale ayant une dimension transversale qui diminue en allant de l'axe de rotation vers le second bord d'attaque.

Cet agencement présente non seulement l'avantage d'éviter la formation d'une semelle du fait que la profondeur d'attaque du terrain varie au fur et à mesure de l'avance, mais encore celui de briser plus efficacement les mottes de terre.

Selon un mode de réalisation de l'invention, la génératrice du disque de labour est constituée par une courbe ou un polygone concave dont une extrémité est à la périphérie du disque et dont l'autre est au voisinage de son centre, ladite génératrice étant entièrement située d'un seul côté de sa tangente qui est perpendiculaire à l'axe de rotation du disque.

Cette forme particulière du disque permet d'augmenter sensiblement son diamètre tout en rabattant correctement la partie supérieure de la terre qui est labourée.

Il en résulte également un meilleur dégagement des végétaux poussant à la surface du terrain labouré et donc une meilleure pénétration et une rotation plus facile des disques qui travaillent ainsi dans de bien meilleures conditions.

Les deux extrémités de la génératrice concave du disque peuvent se trouver dans le même plan, mais il peut en être autrement et selon un mode de réalisation préféré, l'extrémité de la génératrice qui est située au voisinage de l'axe du disque est décalée vers l'avant en direction de l'avancement de la charrue.

A titre d'exemple, un disque de labour selon l'invention peut se présenter sous la forme d'une surface analogue à une portion de tore délimitée par un plan perpendiculaire à son axe ou de préférnce par deux plans, le plan délimitant la périphérie extérieure du disque se trouvant par rapport au sens de la marche en arrière du plan perpendiculaire à l'axe que délimite la périphérie interne du disque au voisinage de son moyeu.

La présente invention a également pour objet une charrue caractérisée par le fait qu'elle comporte des disques présentant les caractéristiques décrites ci-dessus, et plus particulièrement une telle charrue dans laquelle les pales de deux disques adjacents sont décalés angulairement d'une valeur prédéterminée, par exemple d'un angle compris entre environ 10° et 30°), et de préférence entre 15 et 20°.

D'autres caractéristiques de l'invention sont données dans les revendications annexées qui doivent être considérées comme faisant partie de la présente description.

On donnera maintenant à titre d'exemple non limitatif quelques modes de réalisation particuliers de l'invention en référence au dessin schématique annexé dans lequel :
- la figure 1 est une vue en élévation d'un mode de réalisation du disque de labour selon l'invention,
- les figures 2 à 5 sont des sections selon II-II de quatre variantes de réalisation du disque de la figure 1, et
- la figure 6 représente une charrue équipée de disques selon l'invention.

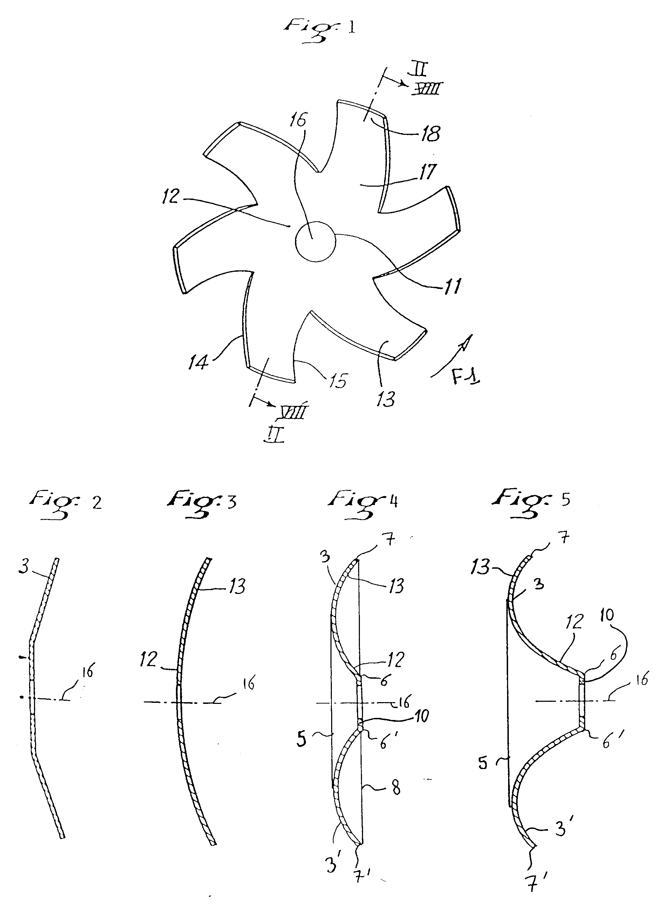

Le disque de labour de la figure 1 comporte à sa partie centrale un plateau percé permettant son montage à la manière connue sur un axe solidaire du châssis d'une charrue, axe autour duquel il peut tourner librement.

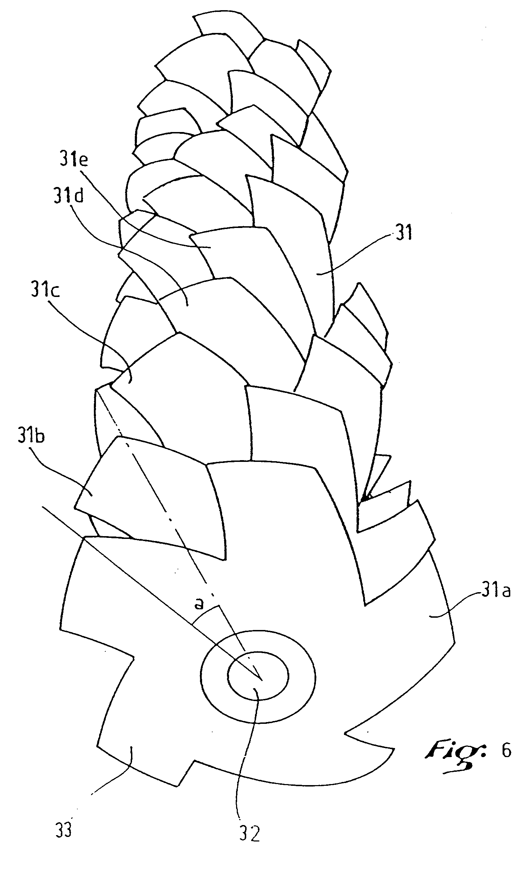

Comme représenté aux figures 2 à 5, chaque demi-coupe axiale de ce disque représente une génératrice 3, 3'. Les quatre variantes présentent des courbes plus ou moins concaves entre la partie centrale 6 et la périphérie 7 du disque. La concavité des génératrices 3, 3' est dirigée dans le sens de l'avancement en direction de la flèche F qui est parallèle à l'axe de rotation 16.

Les génératrices 3, 3' sont situées en entier d'un seul côté de leur tangente 5 perpendiculaire à l'axe 16, leurs extrémités intérieures 6,6' et extérieures 7, 7' se trouvant du même côté de la tangente 5 en direction de la flèche F.

On voit que, dans le cas des figures 2 et 3, les extrémités 6, 6' et 7, 7' des génératrices 3, 3' se trouvent dans un même plan 8 perpendiculaire à l'axe de rotation 16. Dans ces deux cas, le disque de labour est constitué par la section d'une surface analogue à un tore par le plan 8 perpendiculaire à l'axe 4.

Au contraitre, dans les variantes des figures 4 et 5, le plan 8 perpendiculaire à l'axe 16 qui passe par les extrémités extérieures 7, 7' des génératrices 3, 3' est plus proche de la tangente 5 perpendiculaire à l'axe 16 que le plan 10 qui contient les extrémités internes 6,6' des génératrices 3, 3'.

Dans ces deux derniers cas le disque de labour est constitué par la section d'une surface analogue à un tore par deux plans 8 et 10 perpendiculaires à l'axe 16, mais qui sont décalés l'un par rapport à l'autre.

A titre d'exemple, pour un disque ayant un diamètre de l'ordre de 60cm, la distance d entre les plans 5 et 8 (figures 2 et 3), ou 5 et 10 (figures 4 et 5) peut être comprise entre 1cm et 20cm.

On constate que, pour un disque de diamètre donné, l'invention permet de donner aux génératrices 3, 3' une concavité plus importante qui permet un meilleur retournement de terrain.

Pour un même diamètre de l'ordre de 60 cm, la distance d' entre les plans 8 et 10 dans le cas des figures 4 et 5 peut être comprise entre 0 et 20cm.

Dans le mode de réalisation décrit, le disque de labour selon l'invention comporte une succession de pales 13 sur sa périphérie, par exemple entre trois et dix pales, de préférence en nombre impair.

Chaque pale 13 comporte un bord d'attaque tranchant 14 et un bord de fuite 15 ayant la forme d'hélices gauches, du fait de la concavité du disque de labour, mais qui semblent planes dans la vue en élévation dans la direction de l'axe de rotation 16 du disque.

Les bords d'attaque convexes 14 s'éloignent progressivement de l'axe 16 dans le sens de rotation F1 qu'adoptent les disques lorsqu'ils sont entraînés par l'avance de la charrue.

Dans le mode de réalisation représenté, les bords de fuite 15 sont au contraire concaves et la dimension transversale de chaque pale 13 diminue entre sa zone de pied 17 et son extrémité 18.

Vus en plan comme dans la figure 1, les bords 14 et 15 peuvent être constitués par des arcs d'éllipses, l'axe 16 pouvant par exemple être un des foyers des arcs d'éllipses 14.

Dans la variante de la figure 2, le disque de labour selon l'invention présente une section tronconique, alors qu'il présente dans la variante de la figure 3 une section ayant la forme d'une calotte sphérique.

La variante de la figure 4 correspond à une section en forme de section de tore par un plan perpendiculaire à l'axe alors que la variante de la figure 5 correspond à une section en forme de section de tore dont la partie centrale est en saillie.

Les disques décrits ci-dessus peuvent être réalisés par exemple par formage ou par moulage, et avoir un diamètre compris entre 45cm et 150cm ou plus.

On voit sur la figure 6 un ensemble de disques 31 montés solidaires d'un arbre de rotation 32.

L'arbre 32 est monté libre en rotation sur le châssis (non représenté) de la charrue de manière à être incliné par rapport à la direction d'avance de celle-ci.

Chaque disque se présente dans le cas présent sous la forme de cinq pales adjacentes 33, chaque pale ayant son bord d'attaque qui s'éloigne progressivement de l'arbre en tournant dans le sens de rotation du disque lors de son travail.

On voit que deux disques adjacents, par exemple les disques 31a et 31b, sont décalés d'un angle a qui, dans le cas présent, est sensiblement égal à 18°.

Un tel décalage de 18°, associé au fait que les disques comprennent cinq pales, entraîne que la position des disques sur l'axe 32 se retrouve identique à elle-même tous les quatre disques, deux disques 31a et 31e ayant le même décalage angulaire étant séparés par trois disques 31b, 31c, et 31d .

Par conséquent, tous les 18° de rotation de l'ensemble des disques 31, un disque sur quatre attaque le terrain, rendant ainsi le fonctionnement de la charrue pratiquement sans vibration.

## Revendications

1. Disque de labour destiné à être monté libre en rotation sur une charrue en subissant une rotation spontanée lors de l'avancement de la charrue, la périphérie du disque présentant la forme de pales, lesdites pales comprenant un premier bord d'attaque tranchant convexe (14) dont la forme est telle que lorsqu'on se déplace sur lui en allant du centre (16) vers la périphérie du disque, on tourne autour de l'axe de ce dernier dans la direction (F1) opposée au tranchant du premier bord d'attaque; un second bord d'attaque adjacent audit premier bord d'attaque et dont le tranchant s'étend le long de la périphérie du disque, un bord de fuite concave (15) adjacent audit second bord d'attaque et s'étendant en direction du centre (16) du disque; chaque pale (13) ayant une dimension transversale qui diminue en allant de l'axe de rotation (16) vers le second bord d'attaque.

2. Disque selon la revendication 1, caractérisé par le fait que sa génératrice (3,3') est constituée par une courbe ou un polygone concave dont une extrémité (7,7') est à la périphérie du disque (12) et dont l'autre (6,6') est au voisinage de l'axe (16) du disque, ladite génératrice (3,3') étant entièrement située d'un seul côté de sa tangente (5) qui est perpendiculaire à l'axe de rotation (16) du disque.

3. Disque selon la revendication 2, caractérisé par le fait que les extrémités internes (6,6') et externes (7,7') des génératrices (3,3') du disque sont situées dans un même plan perpendiculaire (8) à l'axe de rotation (16) du disque.

4. Disque selon la revendication 2, caractérisé par le fait que l'extrémité (6,6') de la génératrice qui est située au voisinage de l'axe de rotation (16) est plus éloignée de la tangente (5) de la génératrice perpendiculaire à l'axe (16) du disque que l'extrémité externe (7,7') de ladite génératrice.

5. Disque selon la revendication 2, caractérisé par le fait qu'il présente la forme d'une calotte sphérique ou tronconique.

6. Charrue à disques, caractérisée par le fait qu'elle comprend une pluralité de disques (31) selon l'une quelconque des revendications 1 à 5, lesdits disques (31) étant solidaires d'un arbre (32) tournant fou disposé parallèlement au sol en étant incliné par rapport à la direction d'avance de la charrue.

7. Charrue selon la revendication 6, caractérisée par le fait que les pales de deux disques adjacents (31a, 31b) sont décalées angulairement d'une valeur prédéterminée (a).

8. Charrue selon la revendication 7, caractérisée par le fait que les pales de deux disques adjacents (31a et 31b) sont décalées d'environ 10 à 30° et de préférence de 15 à 20°.

## Claims

1. Tilling disc intended to be mounted in free rotation on a plough, undergoing spontaneous rotation as the plough moves along, the periphery of the disc having the shape of blades, the said blades comprising a first convex cutting leading edge (14), the shape of which is such that on moving along it from the centre (16) towards the periphery of the disc, one turns about the axis of the latter in the direction (F1) opposite the cutting edge of the first leading edge; a second leading edge adjacent to the said first leading edge and the cutting edge of which extends along the periphery of the disc, a concave trailing edge (15) adjacent to the said second leading edge and extending in the direction of the centre (26) of the disc; each blade (13) having a transverse dimension which decreases from the axis of rotation (16) towards the second leading edge.

2. Disc according to Claim 1, characterized in that its generatrix (3, 3') consists of a concave polygon or curve, one end (7, 7') of which is at the periphery of the disc (12) and the other end (6, 6') of which is in the vicinity of the axis (16) of the disc, the said generatrix (3, 3') being entirely situated on just one side of its tangent (5) which is perpendicular to the axis of rotation (16) of the disc.

3. Disc according to Claim 2, characterized in that the inside ends (6, 6') and outside ends (7, 7') of the generatrices (3, 3') of the disc are situated in one and the same plane (8) perpendicular to the axis of rotation (16) of the disc.

4. Disc according to Claim 2, characterized in that the end (6, 6') of the generatrix which is situated in the vicinity of the axis of rotation (16) is further from the tangent (5) of the generatrix perpendicular to the axis (16) of the disc than the outside end (7, 7') of the said generatrix.

5. Disc according to Claim 2, characterized in that it has the shape of a spherical or frustoconical cap.

6. Disc plough, characterized in that it comprises a plurality of discs (31) according to any one of Claims 1 to 5, the said discs (31) being secured to a shaft (32) turning freely and located parallel to the ground, being inclined with respect to the direction of forward travel of the plough.

7. Plough according to Claim 6, characterized in that the blades of two adjacent discs (31a, 31b) are angularly offset by a predetermined amount (a).

8. Plough according to Claim 7, characterized in that the blades of two adjacent discs (31a and 31b) are offset by approximately 10 to 30°, and preferably 15 to 20°.

## Patentansprüche

1. Arbeitsscheibe, die zur frei drehbaren Montage an einem Scheibenpflug bestimmt ist und bei der Fortbewegung des Pfluges eine spontane Drehung erfährt, wobei der Umfang der Scheibe die Form von Flügeln hat, welche Flügel aufweisen: eine konvexe erste schneidende Angriffskante (14), die so geformt ist, daß man, wenn man ihr von der Mitte (16) zum Rand der Scheibe folgt, sich um die Achse der letzteren in der der Schneide der ersten Angriffskante entgegengesetzten Richtung (F1) dreht, eine der ersten Angriffskante benachbarte zweite Angriffskante, deren Schneide sich längs des Umfangsrandes der Scheibe erstreckt, eine der zweiten Angriffskante benachbarte konkave Schleppkante (15), die sich in Richtung auf das Zentrum (26) der Scheibe erstreckt; wobei jeder Flügel (13) eine Breite hat, die von der Drehachse (16) in Richtung auf die zweite Angriffskante abnimmt.

2. Scheibe nach Anspruch 1, dadurch gekennzeichnet, daß ihre Erzeugende (3, 3') durch eine konkave Kurve oder ein konkaves Polygon gebildet wird, deren bzw. dessen eines Ende (7, 7') am Umfang der Scheibe (12) liegt, während das andere Ende (6, 6') in der Nähe der Achse (16) der Scheibe liegt, welche Erzeugende (3, 3') in ihrer Gesamtheit auf einer einzigen Seite ihrer zur Drehachse (16) der Scheibe senkrechten Tangente (5) liegt.

3. Scheibe nach Anspruch 2, dadurch gekennzeichnet, daß die inneren (6, 6') und äußeren (7, 7') Enden der Erzeugenden (3, 3') der Scheibe in einer gemeinsamen, zur Drehachse (16) der Scheibe senkrechten Ebene (8) liegen.

4. Scheibe nach Anspruch 2, dadurch gekennzeichnet, daß das Ende (6, 6') der Erzeugenden, das in der Nähe der Drehachse (16) liegt, weiter von der zur Achse (16) der Scheibe senkrechten Tangente (5) der Erzeugenden entfernt ist als das äußere Ende (7, 7') dieser Erzeugenden.

5. Scheibe nach Anspruch 2, dadurch gekennzeichnet, daß sie die Form einer sphärischen oder kegelstumpfförmigen Kalotte hat.

6. Scheibenpflug, dadurch gekennzeichnet, daß er mehrere Scheiben (31) nach einem der Ansprüche 1 bis 5 aufweist, welche Scheiben (31) auf einer freilaufenden Welle (32) sitzen, die parallel zum Boden angeordnet ist, wobei sie in bezug auf die Fortbewegungsrichtung des Pfluges schräggestellt ist.

7. Scheibenpflug nach Anspruch 6, dadurch gekennzeichnet, daß die Flügel von zwei benachbarten Scheiben (31a, 31b) um einen bestimmten Betrag (a) in Drehrichtung gegeneinander versetzt sind.

8. Scheibenflug nach Anspruch 7, dadurch gekennzeichnet, daß die Flügel von zwei benachbarten Scheiben (31a und 31b) um etwa 10 bis 30°, vorzugsweise 15 bis 20° gegeneinander versetzt sind.
